# FASCICULE DE BREVET EUROPEEN

(11) **EP 4 166 389 B1**
(45) Date de publication et mention de la délivrance du brevet: **24.07.2024**
(21) Numéro de dépôt: 22197631.9
(22) Date de dépôt: 26.09.2022
(51) Int. Cl.: B60P 1/54

(54) **SYSTÈME DE MANUTENTION POUR VÉHICULE**
HANDHABUNGSSYSTEM FÜR EIN FAHRZEUG
HANDLING SYSTEM FOR A VEHICLE

(30) Priorité: 13.10.2021 FR 2110732
(43) Date de publication de la demande: 19.04.2023
(73) Titulaire: KNDS France, 78034 Versailles Cedex (FR)
(72) Inventeur: BERTRAND, Ludovic, 18023 BOURGES (FR)
(74) Mandataire: Cabinet Chaillot

(56) Documents cités:
- FR-B1- 2 752 233
- GB-A- 2 105 294
- US-A- 5 062 760
- US-A- 5 156 517

## Description

La présente invention concerne le domaine des systèmes de manutention pour véhicule, et porte plus particulièrement sur un système de manutention détachable pour véhicules blindés.

On connaît du brevet FR2752233B1 un système de manutention comprenant des rails mobiles de l'intérieur vers l'extérieur du véhicule, portés par un bâti monté à demeure à l'intérieur d'un véhicule en permettant un report de charge sur le véhicule. Cependant, la présence d'un tel système conduit à un encombrement non négligeable de l'habitacle, ajoute du poids au véhicule et en outre doit présenter une géométrie propre à chaque type de véhicule à l'intérieur duquel il est monté.

Le document GB 2 105 294 A divulgue également un système de manutention selon l'art antérieur.

Il existe donc un besoin pour un système de manutention qui présente une occupation minimale du véhicule hors utilisation tout en garantissant une reprise de charge par le véhicule en utilisation et qui en outre soit polyvalent.

La solution selon la présente invention repose sur l'emploi de moyens de fixation pour fixer au véhicule une poutre formant glissière pour moyens de levage et l'emploi d'un ensemble rigide d'appui sur le véhicule, les moyens de fixation étant détachable de façon à permettre un stockage à l'extérieur du véhicule lorsque le système de manutention n'est pas en utilisation.

La présente invention a donc pour objet un système de manutention pour véhicule, le véhicule comportant un intérieur et deux portes pivotantes selon des axes de pivotement parallèles et verticaux pour refermer une ouverture de l'intérieur du véhicule vers l'extérieur, le système de manutention comprenant:
- une poutre rigide, ayant une première extrémité dite intérieure et une seconde extrémité dite extérieure ;
- un dispositif de fixation relié à la poutre pour fixation détachable de la poutre à une paroi de l'intérieur du véhicule ;
- un ensemble rigide d'appui solidaire de la poutre dans la région de l'extrémité extérieure, et s'étendant latéralement à partir de celle-ci, l'ensemble rigide d'appui étant destiné, en utilisation, à prendre appui sur chacune des portes lorsque celles-ci sont ouvertes, la poutre traversant alors l'ouverture du véhicule et ayant la région de son extrémité extérieure à l'extérieur du véhicule ; et
- un dispositif de levage configuré pour manoeuvrer une charge et monté mobile le long de la poutre.

Ainsi, hors utilisation, l'ensemble poutre / traverse / dispositif de levage peut être détaché du véhicule pour être stocké ailleurs qu'à l'intérieur du véhicule, par exemple sur le toit, de façon à réduire l'encombrement de l'intérieur du véhicule.

Le dispositif de fixation peut comprendre un bras ayant une première extrémité reliée à la poutre et une seconde extrémité, opposée à la première extrémité, configurée pour fixation à la paroi du véhicule.

Le bras peut être muni, à sa seconde extrémité, d'une pièce de fixation configurée pour être fixée à ladite paroi du véhicule, la pièce de fixation étant, en utilisation, reliée à la seconde extrémité par un axe de pivot parallèle à la direction longitudinale à la poutre. Ainsi, hors utilisation et la poutre détachée, le bras peut être rabattu contre la paroi sur laquelle il est fixé de façon à réduire encore davantage le volume occupé par la partie du système de manutention restant à l'intérieur du véhicule.

Avantageusement, la première extrémité du bras est détachable de la poutre.

Avantageusement, l'ensemble rigide d'appui présente deux faces planes aptes à venir en appui sur un côté supérieur des portes du véhicule lorsqu'elles sont ouvertes. La stabilité de la poutre reposant sur les portes s'en trouve encore améliorée.

Avantageusement, l'ensemble rigide d'appui comprend une traverse s'étendant de façon symétrique de part d'autre de la poutre, perpendiculairement à celle-ci.

Avantageusement, le dispositif de levage est un palan comprenant au moins une poulie d'élévation accrochable à une charge et un câble d'actionnement lié à la poulie d'élévation et actionnable par un utilisateur de façon à lever et abaisser la charge.

Avantageusement, le dispositif de levage comprend en outre une poulie d'extrémité, à l'extrémité extérieure de la poutre, le câble d'actionnement passant par la poulie d'extrémité, courant le long de la poutre, reposant librement sur la navette et la poulie d'élévation et étant fixé à l'extrémité intérieure de la poutre.

La poutre peut être un rail à section transversale en H, le dispositif de levage, le cas échéant la navette, étant monté mobile sur une semelle inférieure du rail, laquelle semelle inférieure est, en utilisation, tournée vers le bas, et le dispositif de fixation et l'ensemble rigide d'appui étant disposés sur l'autre semelle, supérieure, du rail.

Pour mieux illustrer l'objet de la présente invention, on va en décrire ci-après, à titre indicatif et non limitatif, plusieurs modes de réalisation avec référence aux dessins annexés.

Sur ces dessins :
[Fig. 1] est une vue en perspective du système de manutention selon un mode de réalisation particulier de la présente invention ;
[Fig. 2] est une vue en perspective du système de manutention monté sur un véhicule ;
[Fig. 3] est une vue en perspective de dessous du système de manutention, en utilisation ;
[Fig. 4] est une vue en perspective du système de manutention en utilisation à une première étape ;
[Fig. 5] est une vue en perspective du système de manutention en utilisation à une deuxième étape ; et
[Fig. 6] est une vue en perspective du système de manutention en utilisation à une troisième étape.

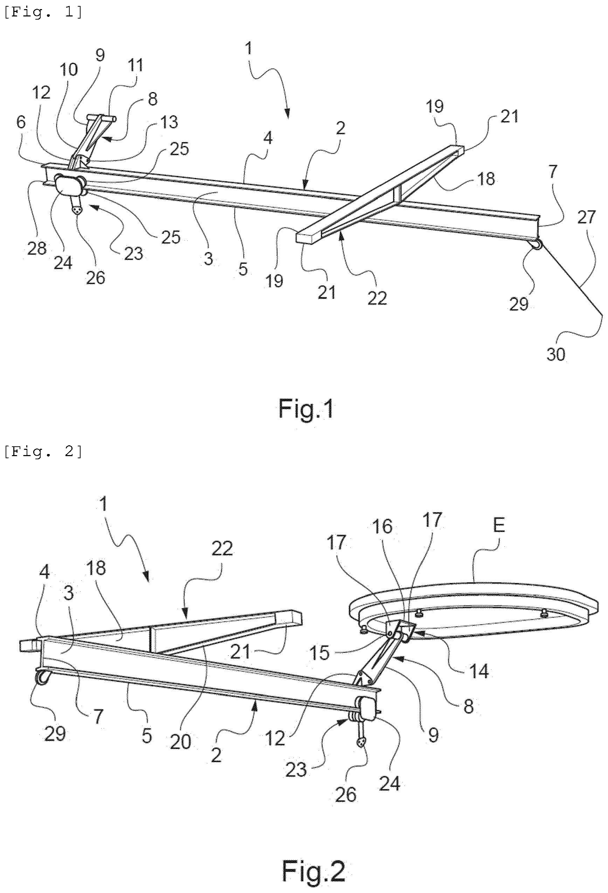

Si l'on se réfère à la Figure 1, on peut voir qu'il y est représenté un système de manutention 1 selon un mode de réalisation particulier de la présente invention, lequel système de manutention 1 est destiné en utilisation à être fixé à un véhicule A, en particulier un véhicule blindé, pour charger/décharger des charges G dans/hors du véhicule A.

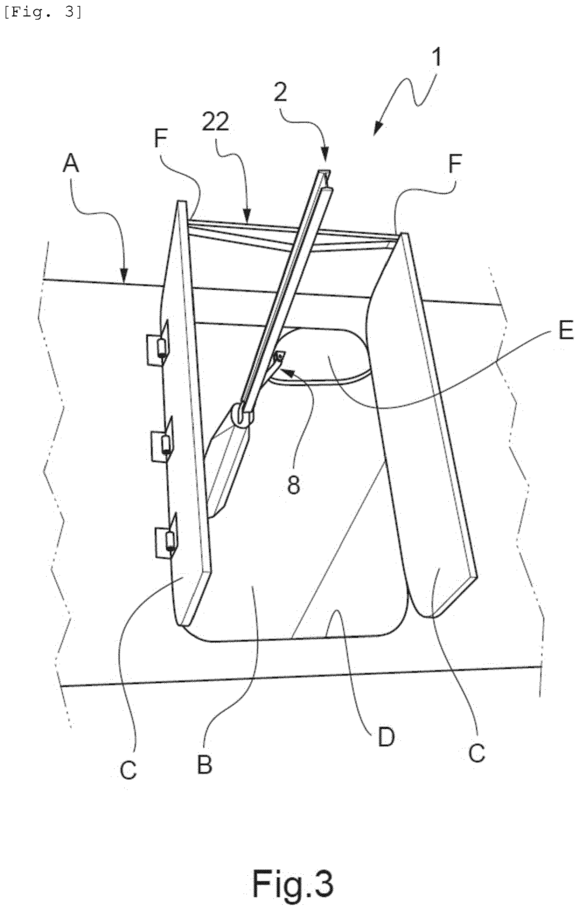

Le système de manutention 1 est en particulier adapté pour être utilisé avec un véhicule A comportant un intérieur B et deux portes C pivotantes selon des axes de pivotement parallèles et verticaux pour refermer une ouverture D de l'intérieur B du véhicule vers l'extérieur, comme on peut le voir sur la Figure 3.

Le système de manutention 1 comprend une poutre 2 rigide, du type rail couramment rencontré et ayant une section transversale en H, avec une âme 3 reliant une semelle supérieure 4 et une semelle inférieure 5. Par supérieur, on entend le côté tourné en utilisation vers le haut et par inférieur, le côté tourné en utilisation vers le bas. La poutre 2 est terminée par une extrémité intérieure 6 et une extrémité extérieure 7. Par intérieur, on entend le côté situé, en utilisation, à l'intérieur du véhicule A et par extérieur, le côté situé, en utilisation, à l'extérieur du véhicule A.

Le système de manutention 1 comprend également un dispositif de fixation 8, articulé, pour fixation détachable de la poutre 2 à une paroi E de l'intérieur B du véhicule A.

Le dispositif de fixation 8 comprend un bras 9 ayant une première extrémité 10 et une seconde extrémité 11. La première extrémité 10 est reliée de façon détachable à une pièce de raccordement 12 solidaire de la semelle supérieure 4. Pour ce faire, des trous sont ménagés dans la pièce de raccordement 12 ainsi que dans la première extrémité 10 du bras 9, de telle sorte que la pièce de raccordement 12 et le bras 9 peuvent être solidarisés au moyens de boulons 13 passant par lesdits trous. Il convient de noter que d'autres moyens de fixation pourront être envisagés, pour autant qu'ils assurent une liaison mécanique solide et permettent le détachement de la poutre 2 par rapport au dispositif de fixation 8.

La seconde extrémité 11 du bras 9 est reliée par une liaison pivot à une pièce de fixation 14. L'axe 15 de la liaison pivot est orienté parallèlement à la direction longitudinale de la poutre 2. Comme on peut le voir sur la Figure 2, la pièce de fixation 14 comporte une partie plane 16 configurée pour être fixée à une paroi E de l'intérieur du véhicule A. La fixation de la pièce de fixation 14 à la paroi E pourra être réalisée par tous moyens appropriés envisageables par l'homme du métier, par exemple au moyen de vis/écrou. La pièce de fixation 14 comporte également deux pattes 17 s'étendant depuis la partie plane 16 et reliées à l'axe 15 du bras 9 de sorte que le bras 9 est apte à pivoter par rapport à la partie plane 16 et donc par rapport à la paroi E à laquelle celle-ci est fixée. De façon particulièrement avantageuse, la pièce de fixation 14 est fixée à la paroi faisant office de plafond de l'intérieur B du véhicule A. Dans le cas d'un véhicule blindé, cette paroi E pourra correspondre à la plaque passe-cloison remplaçant la porte de toit arrière. Il convient toutefois de noter que la plaque de fixation 14 pourrait être fixée à une paroi latérale de l'intérieur B du véhicule A.

Le système de manutention 1 comprend en outre une traverse 18 rigide. La traverse 18 est fixée sur la semelle supérieure 4 de la poutre 2, perpendiculairement à la poutre 2, et s'étendant de façon symétrique de part et d'autre de celle-ci. Les deux extrémités 19 de la traverse 18 présentent sur leur côté inférieur 20 une face plane 21. En utilisation, les faces planes 21 sont destinées à venir en appui sur le côté supérieur F des portes C du véhicule A lorsqu'elles sont ouvertes, comme on peut le voir sur la Figure 3, de façon à permettre une reprise de charge par les portes C du véhicule A, du poids constitué par le système de manutention 1 seul ou par l'ensemble poutre 2/charge G à manoeuvrer.

La traverse 18 constitue ainsi un ensemble rigide d'appui 22 s'étendant latéralement à partir de la poutre 2, destiné, en utilisation, à prendre appui sur chacune des portes C lorsque celles-ci sont ouvertes.

Il convient de noter que l'ensemble rigide d'appui pourrait en variante comprendre deux branches s'étendant depuis la poutre 2 selon des angles différents, pour autant qu'elles assurent le repos de l'ensemble rigide d'appui sur les portes C du véhicule A lorsqu'elles sont ouvertes. Par ailleurs, l'ensemble rigide d'appui pourrait également être fixé à la poutre sur toute zone de celle-ci pour autant qu'il garantisse le fonctionnement du système de manutention.

Comme on peut le voir sur la Figure 3, le dispositif de fixation 8 est disposé sur la poutre 2 côté intérieur et la traverse 19 est disposée sur la poutre 2 côté extérieur.

Le système de manutention 1 comprend en outre un dispositif de levage 23 configuré pour manoeuvrer une charge G. Par manoeuvrer, on entend lever/abaisser une charge G, la déplacer à l'intérieur B du véhicule A et entre l'intérieur B et l'extérieur du véhicule A.

Le dispositif de levage 23 consiste ici en un palan.

Le dispositif de levage 23 comprend une navette 24, configurée pour se déplacer le long de la poutre 2, la poutre 2 formant ainsi glissière pour le dispositif de levage 23. Pour ce faire et comme de façon connue, la navette 24 est équipée de roues 25 roulant sur la semelle inférieure 5 de la poutre 2.

Le dispositif de levage 23 comprend une poulie d'élévation 26, à laquelle, en utilisation, la charge à manoeuvrer G est accrochée.

Le dispositif de levage 23 comprend également un câble d'actionnement 27 configuré pour, sous l'action d'un utilisateur, soulever/abaisser la charge G. Pour ce faire, selon le présent mode de réalisation, une extrémité 28 du câble d'actionnement 27 est fixée à l'extrémité intérieure 6 de la poutre 2. Ensuite, en allant de l'extrémité intérieure 6 à l'extrémité extérieure 7 de la poutre 2, le câble d'actionnement 27 repose librement une première fois sur la navette 24, s'enroule sur la poulie d'élévation 26, repose librement une seconde fois sur la navette 24, court le long de la semelle inférieure 5 et s'enroule sur une poulie d'extrémité 29 disposée à l'extrémité extérieure 7 d'où l'extrémité libre 30 du câble d'actionnement 27 pend librement. Dans cette configuration, le câble d'actionnement 27 soulève la charge G par deux brins.

Pour positionner le système de manutention 1 en position d'utilisation, le dispositif de fixation 8 étant initialement fixé à une paroi E de l'intérieur B du véhicule A, les faces planes 21 de la traverse 18 sont amenées au contact avec le côté supérieur F des portes C du véhicule, celles-ci étant préalablement ouvertes, et la poutre 2 est fixée, par la pièce de raccordement 12, au dispositif de fixation 8. Il convient de noter qu'un degré de liberté additionnel pourra être envisagé au niveau de l'interface extrémité intérieure / dispositif de fixation de façon à permettre une meilleur adaptabilité du système de manutention à différentes ouvertures de véhicule.

En position d'utilisation, la poutre 2 traverse l'ouverture D du véhicule A et a la région de son extrémité extérieure 7 à l'extérieur du véhicule A, comme on peut le voir sur la Figure 3.

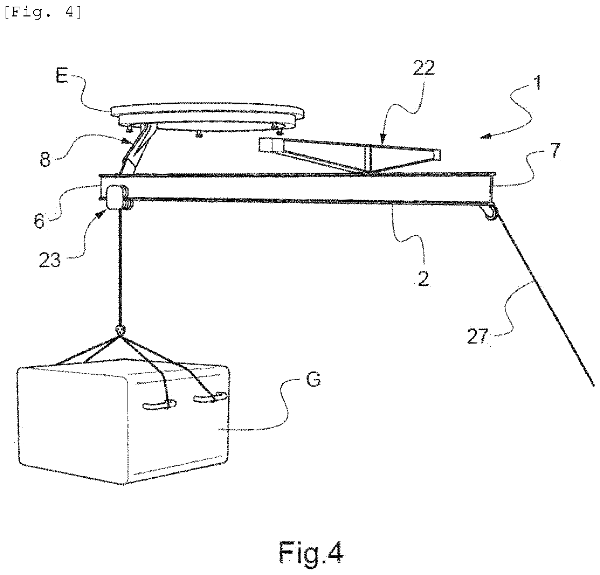

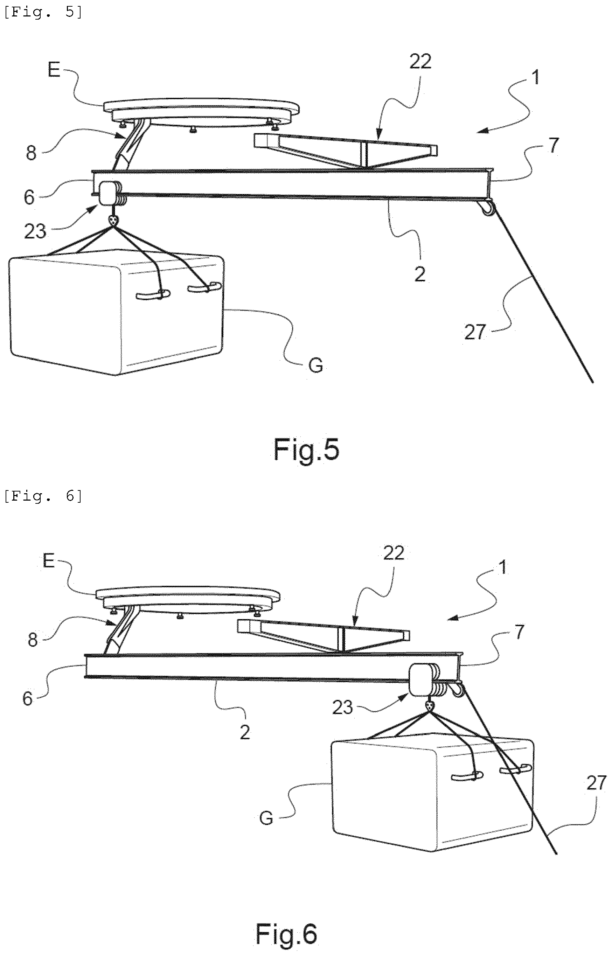

Pour sortir une charge G à l'extérieur du véhicule A, le câble d'actionnement 27 est relâché de façon à pouvoir abaisser la poulie d'élévation 26 où la charge G y sera accrochée. Le câble d'actionnement 27 est tiré par son extrémité libre 30 de façon à soulever la charge G comme on peut le voir sur les Figures 4 et 5. Du fait que le levage de la charge G est réalisé par deux brins, l'effort de traction est la moitié du poids à lever. Une fois la charge G levée à la hauteur souhaitée, la navette 24 est déplacée manuellement, en étant poussée, le long de la poutre 2 vers l'extérieur du véhicule A, comme on peut le voir sur la Figure 6, où le câble d'actionnement 27 est relâché de façon à abaisser la charge G pour ensuite la détacher de la poulie d'élévation 26.

On procède de manière analogue lorsque l'on souhaite embarquer la charge G dans le véhicule A.

Lorsque le système de manutention 1 n'est plus utilisé, l'ensemble poutre 2/traverse 18/dispositif de levage 23 est détaché du dispositif de fixation 8 et peut être stocké par exemple sur le toit du véhicule A. Grâce à la liaison pivot, le dispositif de fixation 8 peut être rabattu contre la paroi E sur laquelle il est fixé de façon à diminuer le volume occupé dans l'intérieur B.

Ainsi, la présente invention est particulièrement avantageuse lorsque le système de manutention 1 est utilisé dans un véhicule de transport de personnes.

Il convient de noter qu'en variante l'intégralité du système de manutention 1 pourrait être détachée du véhicule A en détachant la partie plane 16 du dispositif de fixation 8 par rapport à la paroi E sur laquelle il est fixé.

## Revendications

1. - Système de manutention (1) pour véhicule (A), le véhicule (A) comportant un intérieur (B) et deux portes (C) pivotantes selon des axes de pivotement parallèles et verticaux pour refermer une ouverture (D) de l'intérieur (B) du véhicule (A) vers l'extérieur, le système de manutention (1) comprenant:
- une poutre (2) rigide, ayant une première extrémité dite intérieure (6) et une seconde extrémité dite extérieure (7) ;
- un dispositif de fixation (8) relié à la poutre (2) pour fixation détachable de la poutre (2) à une paroi (E) de l'intérieur (B) du véhicule (A) ; et
- un dispositif de levage (23) configuré pour manoeuvrer une charge (G) et monté mobile le long de la poutre (2); **caractérisé par le fait que** le système de manutention (1) comprend en outre
- un ensemble rigide d'appui (22) solidaire de la poutre (2) dans la région de l'extrémité extérieure (7), et s'étendant latéralement à partir de celle-ci, l'ensemble rigide d'appui (22) étant destiné, en utilisation, à prendre appui sur chacune des portes (C) lorsque celles-ci sont ouvertes, la poutre (2) traversant alors l'ouverture (D) du véhicule (A) et ayant la région de son extrémité extérieure (7) à l'extérieur du véhicule (A).

2. - Système de manutention (1) selon la revendication 1, **caractérisé par le fait que** le dispositif de fixation (8) comprend un bras (9) ayant une première extrémité (10) reliée à la poutre (2) et une seconde extrémité (11), opposée à la première extrémité (10), configurée pour fixation à la paroi (E) du véhicule (A).

3. - Système de manutention (1) selon la revendication 2, **caractérisé par le fait que** le bras (9) est muni, à sa seconde extrémité (11), d'une pièce de fixation (14) configurée pour être fixée à ladite paroi (E) du véhicule (A), la pièce de fixation (14) étant, en utilisation, reliée à la seconde extrémité (11) par un axe de pivot (15) parallèle à la direction longitudinale à la poutre (2).

4. - Système de manutention (1) selon la revendication 2 ou 3, **caractérisé par le fait que** la première extrémité (10) du bras (9) est détachable de la poutre (2).

5. - Système de manutention (1) selon l'une quelconque des revendications 1 à 4, **caractérisé par le fait que** l'ensemble rigide d'appui (22) présente deux faces planes (21) aptes à venir en appui sur un côté supérieur (F) des portes (C) du véhicule (A) lorsqu'elles sont ouvertes.

6. - Système de manutention (1) selon l'une quelconque des revendications 1 à 5, **caractérisé par le fait que** l'ensemble rigide d'appui (22) comprend une traverse (18) s'étendant de façon symétrique de part d'autre de la poutre (2), perpendiculairement à celle-ci.

7. - Système de manutention (1) selon l'une quelconque des revendications 1 à 6, **caractérisé par le fait que** le dispositif de levage (23) est un palan comprenant au moins une poulie d'élévation (26) accrochable à une charge (G) et un câble d'actionnement (27) lié à la poulie d'élévation (26) et actionnable par un utilisateur de façon à lever et abaisser la charge (G).

8. - Système de manutention (1) selon la revendication 7, **caractérisé par le fait que** le dispositif de levage (23) comprend en outre une poulie d'extrémité (29), à l'extrémité extérieure (7) de la poutre (2), le câble d'actionnement (27) passant par la poulie d'extrémité (29), courant le long de la poutre (2), reposant librement sur une navette (24) et la poulie d'élévation (26) et étant fixé à l'extrémité intérieure (6) de la poutre (2).

9. - Système de manutention (1) selon l'une quelconque des revendications 1 à 8, **caractérisé par le fait que** la poutre (2) est un rail à section transversale en H, le dispositif de levage (23), le cas échéant la navette (24), étant monté mobile sur une semelle inférieure (5) du rail, laquelle semelle inférieure (5) est, en utilisation, tournée vers le bas, et le dispositif de fixation (8) et l'ensemble rigide d'appui (22) étant disposés sur l'autre semelle (4), supérieure, du rail.

## Patentansprüche

1. - Handhabungssystem (1) für ein Fahrzeug (A), das Fahrzeug (A) umfassend einen Innenraum (B) und zwei Türen (C), die entlang paralleler und vertikaler Schwenkachsen schwenkbar sind, um eine Öffnung (D) des Innenraums (B) des Fahrzeugs (A) nach außen hin zu verschließen, das Handhabungssystem (1) umfassend:
- einen starren Träger (2), der ein erstes, sogenanntes inneres Ende (6) und ein zweites, sogenanntes äußeres Ende (7) aufweist;
- eine Befestigungsvorrichtung (8), die zur abnehmbaren Befestigung des Trägers (2) mit einer Wand (E) des Innenraums (B) des Fahrzeugs (A) mit dem Träger (2) verbunden ist; und
- eine Hebevorrichtung (23), die konfiguriert ist, um eine Last (G) handzuhaben, und die beweglich entlang des Trägers (2) montiert ist; **dadurch gekennzeichnet, dass** das Handhabungssystem (1) ferner Folgendes umfasst
- eine starre Auflageanordnung (22), die im Bereich des äußeren Endes (7) fest mit dem Träger (2) verbunden ist und sich seitlich davon erstreckt, wobei die starre Auflageanordnung (22) im Gebrauch dazu bestimmt ist, auf jeder der Türen (C) aufzuliegen, wenn diese geöffnet sind, wobei der Träger (2) dann die Öffnung (D) des Fahrzeugs (A) durchquert und sich der Bereich seines äußeren Endes (7) außerhalb des Fahrzeugs (A) befindet.

2. - Handhabungssystem (1) nach Anspruch 1, **dadurch gekennzeichnet, dass** die Befestigungsvorrichtung (8) einen Arm (9) umfasst, der ein erstes Ende (10), das mit dem Träger (2) verbunden ist, und ein zweites Ende (11) gegenüber dem ersten Ende (10), das zur Befestigung an der Wand (E) des Fahrzeugs (A) konfiguriert ist, aufweist.

3. - Handhabungssystem (1) nach Anspruch 2, **dadurch gekennzeichnet, dass** der Arm (9) an seinem zweiten Ende (11) mit einem Befestigungsteil (14) versehen ist, das konfiguriert ist, um an der Wand (E) des Fahrzeugs (A) befestigt zu werden, wobei das Befestigungsteil (14) im Gebrauch durch eine Schwenkachse (15) parallel zu der Längsrichtung des Trägers (2) mit dem zweiten Ende (11) verbunden ist.

4. - Handhabungssystem (1) nach Anspruch 2 oder 3, **dadurch gekennzeichnet, dass** das erste Ende (10) des Arms (9) von dem Träger (2) abnehmbar ist.

5. - Handhabungssystem (1) nach einem der Ansprüche 1 bis 4, **dadurch gekennzeichnet, dass** die starre Auflageanordnung (22) zwei ebene Flächen (21) aufweist, die geeignet sind, um auf einer Oberseite (F) der Türen (C) des Fahrzeugs (A) aufzuliegen, wenn sie geöffnet sind.

6. - Handhabungssystem (1) nach einem der Ansprüche 1 bis 5, **dadurch gekennzeichnet, dass** die starre Auflageanordnung (22) einen Querträger (18) umfasst, der sich symmetrisch auf beiden Seiten des Trägers (2) senkrecht zu diesem erstreckt.

7. - Handhabungssystem (1) nach einem der Ansprüche 1 bis 6, **dadurch gekennzeichnet, dass** die Hebevorrichtung (23) ein Flaschenzug ist, umfassend mindestens eine Heberolle (26), die an einer Last (G) einhängbar ist, und ein Betätigungsseil (27) umfasst, das mit der Heberolle (26) verbunden ist und von einem Benutzer betätigbar ist, um die Last (G) anzuheben und abzusenken.

8. - Handhabungssystem (1) nach Anspruch 7, **dadurch gekennzeichnet, dass** die Hebevorrichtung (23) ferner eine Endrolle (29) an dem äußeren Ende (7) des Trägers (2) umfasst, wobei das Betätigungsseil (27) durch die Endrolle (29) verläuft, entlang des Trägers (2) läuft, frei auf einem Schlitten (24) und der Heberolle (26) ruht und am inneren Ende (6) des Trägers (2) befestigt ist.

9. - Handhabungssystem (1) nach einem der Ansprüche 1 bis 8, **dadurch gekennzeichnet, dass** der Träger (2) eine Schiene mit H-förmigem Querschnitt ist, wobei die Hebevorrichtung (23), gegebenenfalls das Shuttle (24), beweglich auf einem unteren Flansch (5) der Schiene montiert ist, wobei der untere Flansch (5) im Gebrauch nach unten gerichtet ist, und die Befestigungsvorrichtung (8) und die starre Auflageanordnung (22) auf dem anderen, oberen Flansch (4) der Schiene angeordnet sind.

## Claims

1. - A handling system (1) for a vehicle (A), the vehicle (A) comprising an interior (B) and two doors (C) pivoting along parallel and vertical pivot axes to close an opening (D) from the interior (B) of the vehicle (A) outwards, the handling system (1) comprising:
- a rigid beam (2), having a first so-called inner end (6) and a second so-called outer end (7);
- an attachment device (8) connected to the beam (2) for detachable attachment of the beam (2) to a wall (E) of the interior (B) of the vehicle (A);
- a lifting device (23) configured to maneuver a load (G) and mounted movably along the beam (2); **characterised in that** the handling system (1) further comprises
- a rigid support assembly (22) secured to the beam (2) in the region of the outer end (7), and extending laterally from the latter, the rigid support assembly (22) being intended, in use, to bear on each of the doors (C) when the latter are open, the beam (2) then passing through the opening (D) of the vehicle (A) and having the region of its outer end (7) outside the vehicle (A).

2. - The handling system (1) according to claim 1, **characterised in that** the attachment device (8) comprises an arm (9) having a first end (10) connected to the beam (2) and a second end (11), opposite the first end (10), configured for attachment to the wall (E) of the vehicle (A) .

3. - The handling system (1) according to claim 2, **characterised in that** the arm (9) is provided, at its second end (11), with an attachment part (14) configured to be attached to said wall (E) of the vehicle (A), the attachment part (14) being, in use, connected to the second end (11) by a pivot pin (15) parallel to the direction longitudinal to the beam (2).

4. - The handling system (1) according to claim 2 or 3, **characterised in that** the first end (10) of the arm (9) is detachable from the beam (2).

5. - The handling system (1) according to any one of claims 1 to 4, **characterised in that** the rigid support assembly (22) has two flat faces (21) adapted to bear on an upper side (F) of the doors (C) of the vehicle (A) when they are open.

6. - The handling system (1) according to any one of claims 1 to 5, **characterised in that** the rigid support assembly (22) comprises a crosspiece (18) extending symmetrically on both sides of the beam (2), perpendicular thereto.

7. - The handling system (1) according to any one of claims 1 to 6, **characterised in that** the lifting device (23) is a hoist comprising at least one lifting pulley (26) attachable to a load (G) and an actuating cable (27) connected to the lifting pulley (26) and operable by a user so as to raise and lower the load (G).

8. - The handling system (1) according to claim 7, **characterised in that** the lifting device (23) further comprises an end pulley (29), at the outer end (7) of the beam (2), the actuating cable (27) passing through the end pulley (29), running along the beam (2), resting freely on a shuttle (24) and the lifting pulley (26) and being attached to the inner end (6) of the beam (2).

9. - The handling system (1) according to any one of claims 1 to 8, **characterised in that** the beam (2) is a rail with an H-shaped cross-section, the lifting device (23), if applicable the shuttle (24), being movably mounted on a lower flange (5) of the rail, which lower flange (5) is, in use, facing downwards, and the attachment device (8) and the rigid support assembly (22) being arranged on the other, upper flange (4) of the rail.
